# EUROPEAN PATENT APPLICATION

(11) **EP 4 418 120 A1**
(43) Date of publication of application: **21.08.2024**
(21) Application number: 22906226.0
(22) Date of filing: 25.11.2022
(51) Int. Cl.: G06F 9/54

(54) **CALLING PROCESSING METHOD, SYSTEM, AND DEVICE**

(30) Priority: 17.12.2021 CN 202111556218
(71) Applicant: Huawei Technologies Co., Ltd., Shenzhen, Guangdong 518129 (CN)
(72) Inventor: CHEN, Xiao, Shenzhen, Guangdong 518129 (CN); PANOOR, Ajo Jose, Shenzhen, Guangdong 518129 (CN)
(74) Representative: Pfenning, Meinig & Partner mbB
(86) International application number: PCT/CN2022/134294
(87) International publication number: WO 2023/109475

(57) **Abstract**

Embodiments of this application provide a call processing method and system, and a device, to transfer call chain information during call. After obtaining a first call request, when receiving a second call request that carries a first thread identifier, a first agent server of a first node can input, into a header file of the second call request based on a first mapping relationship, second call chain information obtained through processing based on first call chain information, to obtain a third call request, where the first mapping relationship is a mapping relationship between the first call chain information and the first thread identifier. In this way, the first node does not need to perform call chain-related processing in a process of generating the second call request, thereby achieving zero intrusion of a service into a call chain.

## Description

This application claims priority to Chinese Patent Application No. CN202111556218.1, filed with the China National Intellectual Property Administration on December 17, 2021 and entitled "CALL PROCESSING METHOD AND SYSTEM, AND DEVICE", which is incorporated herein by reference in its entirety.

### TECHNICAL FIELD

Embodiments of this application relate to the call chain field, and in particular, to a call processing method and system, and a device.

### BACKGROUND

As application scope of the microservice technology is expanded, requirements for fault locating and diagnosis of microservices based on call chains continuously increase. Pinpointing in the call chain technology modifies program code. Therefore, once a microservice that uses a call chain locates a fault, the call chain related to the microservice in which the fault occurs needs to be modified layer by layer. Therefore, an agent-based call chain emerges.

A service mesh-based call chain can eliminate pinpointing in a service when the call chain is generated in the service, thereby reducing intrusiveness to the service. In the service mesh-based call chain, an agent is bound to a service one by one, so that the agent intercepts a client request sent by a front gateway to the service. The agent generates, based on the client request, call chain information corresponding to the client request, and sends the call chain information to the service. After updating the call chain information, the service sends the call chain information to a called service. In this way, although the problem of the pinpointing is resolved, a service still needs to process call chain information transferred between services, which cannot completely eliminate impact of transfer of a call chain on the service. How to eliminate impact of the call chain on the service and achieve zero intrusion of the service into the call chain becomes an urgent problem to be resolved at present.

### SUMMARY

Embodiments of this application provide a call processing method and system, and a device. A first agent server of a first node obtains a first call request. The first call request is used to call a first service on the first node, the first service includes at least one sub-service, and the first call request carries first call chain information and a first thread identifier. When receiving a second call request sent by the first node, the first agent server processes the second call request based on a first mapping relationship and the first thread identifier to obtain a third call request. The second call request carries the first thread identifier, and the second call request is used to call a second service on a second node. The third call request carries the first thread identifier and second call chain information. The second call chain information is call chain information generated by the first agent server based on the first call chain information. The first mapping relationship is a mapping relationship between the first thread identifier and the first call chain information. In this way, the first node does not need to perform call chain-related processing in a process of generating the second call request, thereby eliminating impact of a call chain on a service, and achieving zero intrusion of the service into the call chain.

A first aspect of embodiments of this application provides a call processing method. The method includes: A first agent server of a first node obtains a first call request, where the first call request is used to call a first service on the first node, the first service includes at least one sub-service, and the first call request carries first call chain information and a first thread identifier. The first agent server sends the first call request to the first node. The first agent server obtains a second call request sent by the first service. The second call request is used to call a second service on a second node, the second service is any sub-service of the first service, the second call request carries the first thread identifier, and the second call request may not carry call chain information. The first agent server processes the second call request based on the first thread identifier and a first mapping relationship to obtain a third call request. The third call request carries second call chain information and the first thread identifier, the second call chain information is call chain information generated by the first agent server based on the first call chain information, and the first mapping relationship is a mapping relationship between the first thread identifier and the first call chain information. The first agent server sends the third call request to the second node.

In this embodiment of this application, after the first agent server of the first node obtains the first call request used to call the first service on the first node, when the first agent server receives the second call request sent by the first node, the first agent server processes the second call request based on the first thread identifier carried in the second call request and the first mapping relationship, to obtain the third call request. The second call request does not carry call chain information, the third call request carries the second call chain information and the first thread identifier, the second call chain information is the call chain information generated by the first agent server based on the first call chain information, and the first mapping relationship is the mapping relationship between the first thread identifier and the first call chain information. The first agent server sends the third call request to the second node. In this way, when the first service on the first node does not process the first call chain information, the call chain information is transferred from the first node to the second node, and the first node does not need to perform call chain-related processing in a process of generating the second call request, thereby eliminating impact of a call chain on a service, and achieving zero intrusion of the service into the call chain.

In a possible implementation of the first aspect, that the first agent server processes the second call request based on the first thread identifier and a first mapping relationship to obtain a third call request includes: The first agent server obtains the first call chain information based on the first thread identifier and the first mapping relationship. The first agent server generates the second call chain information based on the first call chain information. The first agent server adds the second call chain information to the second call request to obtain the third call request. In this embodiment of this application, after obtaining the first call chain information based on the first thread identifier and the first mapping relationship, the first agent server generates the second call chain information based on the first call chain information. The first agent server adds the second call chain information to the second call request to obtain the third call request. The third call request carries the second call chain information and the first thread identifier, and the third call request is used to call the second service. A specific processing method for processing, based on the first thread identifier and the first mapping relationship, the second call request to obtain the third call request transferred by the node is provided, thereby improving implementability of the solution.

In a possible implementation of the first aspect, before the first agent server sends the first call request to the first node, the method further includes: The first agent server deletes the first call chain information carried in the first call request. In this embodiment of this application, when forwarding a first call packet to the first node, the first agent server deletes the first call chain information carried in the first call packet, thereby reducing redundant information in packet transfer and saving network resources.

In a possible implementation of the first aspect, the method further includes: The first agent server obtains a response to the third call request. The response to the third call request carries a second thread identifier and third call chain information. The first agent server determines whether the first thread identifier is consistent with the second thread identifier. If the first thread identifier is inconsistent with the second thread identifier, the first agent server sends a preset packet to the first node. In this embodiment of this application, after obtaining the response to the third call request, the first agent server compares the second thread identifier carried in the response to the third call request with the first thread identifier, to determine whether the response to the third call request and the third call request are in a same thread. If the second thread identifier is inconsistent with the first thread identifier, it indicates that the response to the third call request and the third call request are not in a same thread, and call chain information of this call may be disordered. The first agent server sends the preset packet to the first node, and the preset packet is an alarm packet. An alarm is generated for a call whose call chain information may be disordered, thereby improving implementability of the solution.

In a possible implementation of the first aspect, the first call request further carries a first character string. That the first agent server processes the second call request based on the first thread identifier and a first mapping relationship to obtain a third call request includes: The first agent server generates the second call chain information based on the first thread identifier and the first mapping relationship. The first agent server obtains the first character string based on the first thread identifier and a second mapping relationship. The second mapping relationship is a mapping relationship between the first character string and the first thread identifier. The first agent server adds the second call chain information and the first character string to the second call request to obtain the third call request. In this embodiment of this application, the first call request further carries the first character string. After obtaining the second call request, the first agent server obtains the first character string and the first call chain information based on the first thread identifier, the first mapping relationship, and the second mapping relationship. The first agent server generates the second call chain information based on the first call chain information, and the first agent server adds the second call chain information and the first character string to the second call request to obtain the third call request, so that the first character string can be transferred in the third call request. The second mapping relationship is the mapping relationship between the first character string and the first thread identifier. Code snippets that do not need to be processed by services can be transferred in the call chain by adding the code snippets to packets in the agent, thereby improving implementability of the solution.

In a possible implementation of the first aspect, the method further includes: The first agent server obtains a response to the third call request. The response to the third call request carries a second character string, and the second character string is a character string obtained after the first character string is processed by using the second service. The first agent server evaluates quality of communication between the first node and the second node based on the first character string and the second character string. In this embodiment of this application, after obtaining the second character string, the first agent server evaluates the quality of communication between the first node and the second node based on comparison between the first character string and the second character string. In a service calling process, the quality of communication between the nodes is collected, thereby improving implementability of the solution.

A second aspect of embodiments of this application provides a call processing system. The system includes a first node and a first agent server of the first node. The first agent server of the first node is configured to: obtain a first call request, where the first call request is used to call a first service on the first node, the first service includes at least one sub-service, and the first call request carries first call chain information and a first thread identifier; send the first call request to the first node; obtain a second call request sent by the first service, where the second call request is used to call a second service on a second node, the second service is any sub-service of the first service, the second call request carries the first thread identifier, and the second call request may not carry call chain information; process the second call request based on the first thread identifier and a first mapping relationship to obtain a third call request, where the third call request carries second call chain information and the first thread identifier, the second call chain information is call chain information generated by the first agent server based on the first call chain information, and the first mapping relationship is a mapping relationship between the first thread identifier and the first call chain information; and send the third call request to the second node. The first node is configured to: receive the first call request sent by the first agent server; generate the second call request based on the first call request and a third mapping relationship, where the third mapping relationship is a mapping relationship between the first service and the second service; and send the second call request to the first agent server. In this embodiment of this application, the first agent server of the first node intercepts the first call request for calling the first service on the first node, obtains the first call chain information carried in the first call request and the first thread identifier, and generates the first mapping relationship between the first call chain information and the first thread identifier. In this way, when the first agent server receives the second call request sent by the first node, the second call request does not carry call chain information. The first agent server processes the second call request based on the first thread identifier carried in the second call request and the first mapping relationship, to obtain the third call request. The third call request carries the second call chain information and the first thread identifier, and the second call chain information is the call chain information generated by the first agent server based on the first call chain information. The first agent server sends the third call request to the second node. In this way, when the first service on the first node does not process the first call chain information, the call chain information is transferred from the first node to the second node, and the first node does not need to perform call chain-related processing in a process of generating the second call request, thereby eliminating impact of a call chain on a service, and achieving zero intrusion of the service into the call chain.

In a possible implementation of the second aspect, the first agent server is specifically configured to: obtain the first call chain information based on the first thread identifier and the first mapping relationship; generate the second call chain information based on the first call chain information; and add the second call chain information to the second call request to obtain the third call request. In this embodiment of this application, after obtaining the first call chain information based on the first thread identifier and the first mapping relationship, the first agent server generates the second call chain information based on the first call chain information. The first agent server adds the second call chain information to the second call request to obtain the third call request. The third call request carries the second call chain information and the first thread, and the third call request is used to call the second service. A specific processing method for processing, based on the first thread identifier and the first mapping relationship, the second call request to obtain the third call request transferred by the node is provided, thereby improving implementability of the solution.

In a possible implementation of the second aspect, the first agent server is further configured to delete the first call chain information carried in the first call request. In this embodiment of this application, when forwarding a first call packet to the first node, the first agent server deletes the first call chain information carried in the first call packet, thereby reducing redundant information in packet transfer and saving network resources.

In a possible implementation of the second aspect, the first agent server is further configured to: obtain a response to the third call request, where the response to the third call request carries a second thread identifier and third call chain information; determine whether the first thread identifier is consistent with the second thread identifier; and if the first thread identifier is inconsistent with the second thread identifier, send a preset packet to the first node. In this embodiment of this application, after obtaining the response to the third call request, the first agent compares the second thread identifier carried in the response to the third call request with the first thread identifier, to determine whether the response to the third call request and the third call request are in a same thread. If the second thread identifier is inconsistent with the first thread identifier, it indicates that the response to the third call request and the third call request are not in a same thread, and call chain information of this call may be disordered. The first agent server sends the preset packet to the first node, and the preset packet is an alarm packet. An alarm is generated for a call whose call chain information may be disordered, thereby improving implementability of the solution.

In a possible implementation of the second aspect, the first call request further carries a first character string. The first agent server is specifically configured to: generate the second call chain information based on the first thread identifier and the first mapping relationship; obtain the first character string based on the first thread identifier and a second mapping relationship, where the second mapping relationship is a mapping relationship between the first character string and the first thread identifier; and add the second call chain information and the first character string to the second call request to obtain the third call request. In this embodiment of this application, the first call request further carries the first character string. After obtaining the second call request, the first agent server obtains the first character string and the first call chain information based on the first thread identifier, the first mapping relationship, and the second mapping relationship, and the second mapping relationship is the mapping relationship between the first character string and the first thread identifier. The first agent server generates the second call chain information based on the first call chain information, and the first agent adds the second call chain information and the first character string to the second call request to obtain the third call request, so that the first character string can be transferred in the third call request. Code snippets that do not need to be processed by services can be transferred in the call chain by adding the code snippets to packets in the agent, thereby improving implementability of the solution.

In a possible implementation of the second aspect, the first agent server is further configured to: obtain a response to the third call request, where the response to the third call request carries a second character string, and the second character string is a character string obtained after the first character string is processed by using the second service; and evaluate quality of communication between the first service and the second service based on the first character string and the second character string. In this embodiment of this application, after obtaining the second character string, the first agent server evaluates the quality of communication between the first node and the second node based on comparison between the first character string and the second character string. In a service calling process, the quality of communication between the nodes is collected, thereby improving implementability of the solution.

A third aspect of embodiments of this application provides an agent server. The agent server includes: an obtaining unit, configured to obtain a first call request, where the first call request is used to call a first service on the first node, the first service includes at least one sub-service, and the first call request carries first call chain information and a first thread identifier; a sending unit, configured to send the first call request to the first node, where the obtaining unit is further configured to obtain a second call request sent by the first service, where the second call request is used to call a second service on a second node, the second service is any sub-service of the first service, the second call request carries the first thread identifier, and the second call request may not carry call chain information; and a processing unit, configured to process the second call request based on the first thread identifier and a first mapping relationship to obtain a third call request, where the third call request carries second call chain information and the first thread identifier, the second call chain information is call chain information generated by the first agent server based on the first call chain information, and the first mapping relationship is a mapping relationship between the first thread identifier and the first call chain information, where the sending unit is configured to send the third call request to the second node. The agent server has a function performed by the first agent server in the first aspect, any possible implementation of the first aspect, the second aspect, or any possible implementation of the second aspect. The function may be implemented by hardware, or may be implemented by hardware by executing corresponding software. The hardware or the software includes one or more modules corresponding to the function.

A fourth aspect of embodiments of this application provides an agent server. The agent server includes one or more processors. The one or more processors are coupled to a memory, the memory stores a program, and when the program stored in the memory is executed by the one or more processors, the call processing method according to any one of the first aspect or the possible implementations of the first aspect.

A fifth aspect of this application provides a computer-readable storage medium. The computer-readable storage medium stores instructions. When the instructions are run on a computer, the computer is enabled to perform the call processing method according to any one of the first aspect or the possible implementations of the first aspect.

### BRIEF DESCRIPTION OF DRAWINGS

FIG. 1 is a schematic diagram of a structure of a call chain according to an embodiment of this application;
FIG. 2 is a schematic diagram of a structure of call chain transfer according to an embodiment of this application;
FIG. 3 is a schematic diagram of a structure of a process processor according to an embodiment of this application;
FIG. 4 is a schematic flowchart of a call processing method according to an embodiment of this application;
FIG. 5 is another schematic flowchart of a call processing method according to an embodiment of this application;
FIG. 6 is a schematic diagram of a forwarding thread model based on a state machine according to an embodiment of this application;
FIG. 7 is a schematic diagram of an event-based driven thread model based on a state machine according to an embodiment of this application;
FIG. 8 is another schematic flowchart of a call processing method according to an embodiment of this application;
FIG. 9 is a schematic diagram of a structure of a call processing system according to an embodiment of this application;
FIG. 10 is a schematic diagram of a structure of a first agent server according to an embodiment of this application;
FIG. 11 is a schematic diagram of a structure of a first node according to an embodiment of this application;
FIG. 12 is another schematic diagram of a structure of a first agent server according to an embodiment of this application; and
FIG. 13 is another schematic diagram of a structure of a first node according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

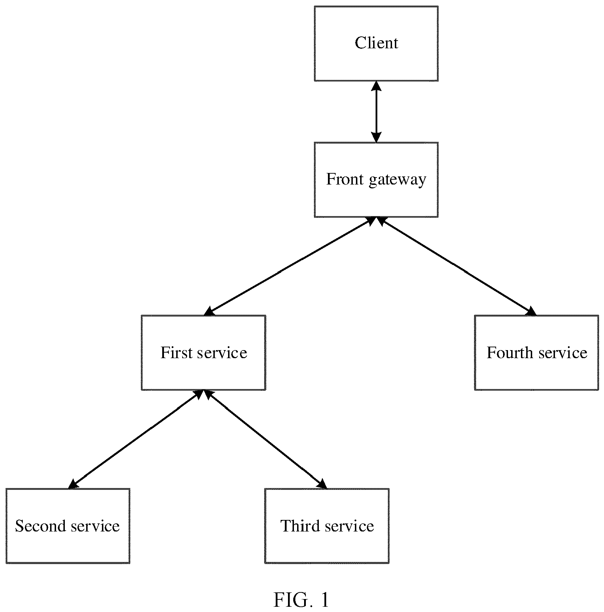

To facilitate understanding of the technical solutions of this application, a call chain is first briefly described with reference to FIG. 1. FIG. 1 is a schematic diagram of a structure of a call chain according to an embodiment of this application. A client may be configured to provide specific businesses, and types of the businesses are more variable, for example, a purchase business, a payment business, and a reservation business. These businesses are implemented only when supported by different services. For example, the payment business usually includes determining a payee, initiating a payment request, confirming a payment request, and entering a password. The front gateway directly connected to the client distributes, to a service that can support implementation of the business, a business initiated by the client. Implementation of the service may include a sub-service. In this case, the service calls the sub-services to support the implementation of the business. In FIG. 1, the front gateway separately distributes, to a first service and a fourth service, a business initiated by the client. The first service further includes two sub-services that are respectively the second service and a third service. In this way, the first service needs to call the second service and the third service again.

It should be noted that the foregoing relationship between the client, the front gateway, and the call chain is merely an example, and does not impose a specific limitation.

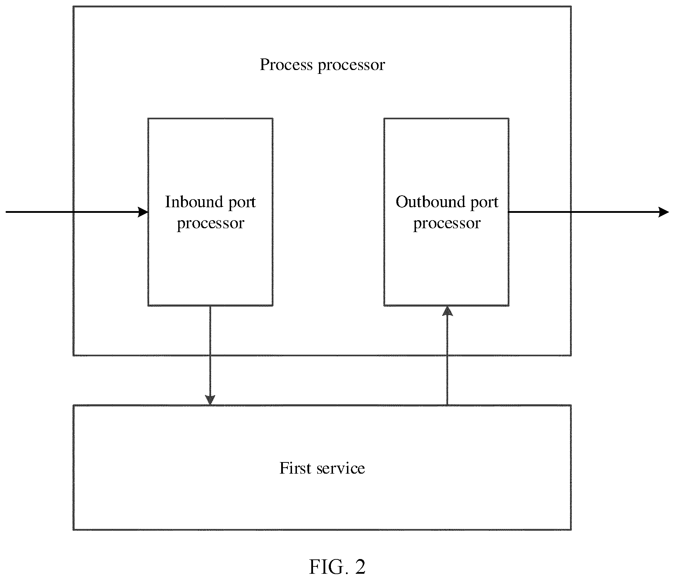

In FIG. 1, calls at different levels are connected in series by using call chain information. The following describes specific content and a transfer method of the call chain information with reference to FIG. 2. FIG. 2 is a schematic diagram of a structure of call chain transfer according to an embodiment of this application. In a call chain transfer method based on a service mesh, each service is bound to one agent. In a service mesh, the agent is usually referred to as a process processor (sidecar). In call chain transfer, the agent may replace a pinpointing function of a service, thereby reducing pinpointing of the service in a call chain information transfer process. The pinpointing is an action of checking and modifying call chain information. Herein, specific description is provided with reference to the call chain structure in FIG. 1. A service in FIG. 2 is a first service, a service that is to be called by the first service is a second service, and a process processor further includes an inbound port processor (inbound) configured to process a packet that is to enter the first service and an outbound port processor (outbound) configured to process a packet that is to be sent from the first service. From the perspective of names, the inbound port processor and the outbound port processor are port processors that separately process a packet entering the first service and a packet leaving the first service. When intercepting a call request sent to the first service, the inbound port processor decodes the call request sent to the first service to obtain call chain information of the call request packet. If the call request sent to the first service does not include the call chain information of the call request packet, the inbound port processor of the first service needs to write a newly generated current service identifier (spanID) into a header file of the call request sent to the first service, and the current service identifier is also used as a call chain identifier (traceID) for subsequent transfer in a call chain. In this case, the call chain information does not contain a parent service identifier (parentID). After receiving the call request sent by the process processor, the first service separately calls the second service and the third service, and inserts, into header files of call requests for calling the second service and the third service, received call chain information sent by the process processor. After receiving the call request for calling the second service by the first service, the outbound port processor of the first service generates a new current service identifier, uses, as a new parent service identifier, a current service identifier carried in the call request for calling the second service, and uses the call chain identifier as a group of new call chain information, where the call chain identifier remains unchanged. The outbound port processor of the first service deletes the call chain information in the call request for calling the second service, and inserts the new call chain information into the header file of the call request for calling the second service. The outbound port processor of the first service sends the processed call request for calling the second service.

It should be noted that the first service and the second service in FIG. 2 may be separately provided on different nodes, or may be provided on a same node. This is not specifically limited herein.

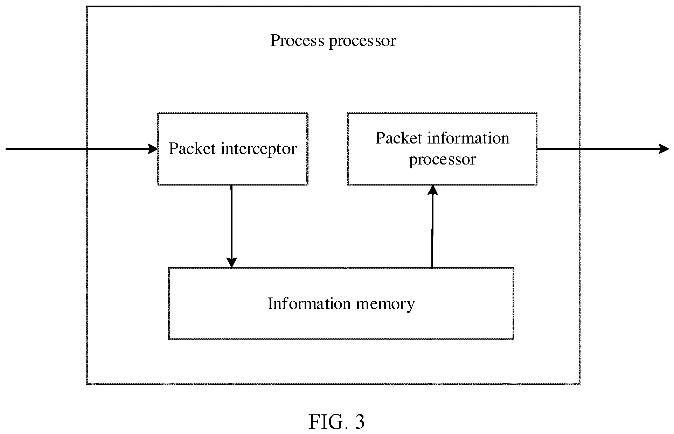

Based on the foregoing structure of the call chain and the structure of the first service, the following is provided to eliminate processing of call chain information by the first service in generating a call request for calling a second service. FIG. 3 is a schematic diagram of a structure of a process processor according to an embodiment of this application. The process processor is an agent server of a first node, and includes a packet interceptor, an information memory, and a packet information processor. The packet interceptor may be communicatively connected to the information memory and the packet information processor, and is configured to intercept a call request and a call response that enter and exit the first node. Optionally, the intercepted call request of the first node may be sent to the packet information processor for processing. In this embodiment of this application, call requests that enter and exit the first node are used as an example to briefly describe the process processor. The information memory may be communicatively connected to the packet information processor and the packet interceptor, and is configured to generate a mapping relationship between a thread identifier and call chain information that are carried in a packet intercepted by the packet interceptor, and store the mapping relationship. The packet information processor may be communicatively connected to the packet interceptor and the information memory, and is configured to directly send the packet intercepted by the packet interceptor or send the packet after processing. After receiving the packet intercepted by the packet interceptor, the packet information processor may determine, through searching the information memory, whether a thread identifier of the packet is stored in the information memory. If the thread identifier of the packet is stored in the information memory, the packet information processor processes the call chain information based on the thread identifier and the mapping relationship, and injects the processed call chain information into a packet header of the packet. The packet information processor sends the packet after having processed the packet. Optionally, for a packet that needs to be sent to the first node, the packet information processor may delete call chain information in a packet header of the packet, and then send the packet to the first node.

In the solution provided in this application, the call chain information may be transferred by using the solution during call, and in addition, some information for assisting network determining may be transferred by using the solution. The following describes, with reference to different use scenarios and transferred content, the solution provided in this application in specific embodiments.

### I. Call chain information is transferred in a call request.

It can be easily learned from the foregoing process processor provided in embodiments of this application that the process processor has a plurality of application scenarios, including but not limited to the following: A first node receives a call request. The first node sends a call request. The first node receives a call response. The following first describes packet interaction between the first node and an agent server of the first node when the first node transfers a call.

### 1. The call is transferred between the first node and the agent server of the first node.

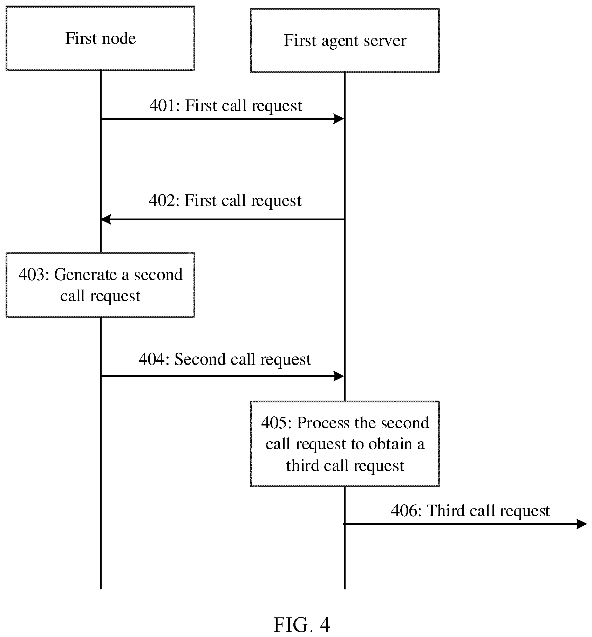

An embodiment of this application provides interaction between the first node and a first agent server of the first node when the first node receives a first call request and needs to call a sub-service of a first service on the first node. FIG. 4 is a schematic flowchart of a call processing method according to an embodiment of this application.

401: The first agent server obtains a first call request.

A packet interceptor in the first agent server of the first node obtains the first call request. The first call request is used to call a first service on the first node, the first call request carries first call chain information and a first thread identifier, and the first service has at least one sub-service. When the first service is called, the first service needs to call all sub-services of the first service. In this embodiment of this application, that the first service calls a second service is used as an example, and the second service is any sub-service of the first service.

For reference, header file content of the first call request is shown in Table 1, and Table 1 shows a header file of the call request packet provided in this embodiment of this application.

**Table 1: Header file of the call request packet according to this embodiment of this application**

| Header file of the first call request | | | | |
|---|---|---|---|---|
| First call chain information | | | First thread identifier | ... |
| First call chain identifier: traceid1 | First current service identifier: spanid1 | First parent service identifier: 0 | pid1 | ... |
| ... | ... | ... | ... | ... |

The first call chain information includes the first call chain identifier, the first current service identifier, and the first parent service identifier. The first call chain identifier is traceid1, the first current service identifier is spanid1, and the first parent service identifier is 0. Because the first service is a service directly called by a client by using a front gateway, the first parent service identifier is 0 or empty. This is not specifically limited herein. The first thread identifier is pid1.

It should be noted that the header file of the call request and the call chain information provided in this embodiment of this application are merely examples. In actual application, specific content and a generation rule of the call chain identifier, the current service identifier, and the parent service identifier may be independently set according to a requirement.

402: The first agent server sends the first call request to the first node.

After generating a first mapping relationship, the first agent server sends the first call request to the first node.

Optionally, before the first agent server sends the first call request to the first node, the first agent server may delete the first call chain information carried in the first call request, and send, to the first node, the first call request from which the first call chain information is deleted.

For reference, after the first call chain information carried in the first call request is deleted from the first call request, header file content of the first call request is shown in Table 2, and Table 2 shows another header file of the call request packet provided in this embodiment of this application.

**Table 2: Another header file of the call request packet according to this embodiment of this application**

| Header file of the first call request | |
|---|---|
| First thread identifier | ... |
| pid1 | ... |
| ... | ... |

The header file of the first call request from which the first call chain information is deleted includes the first thread identifier, and the first thread identifier is pid1.

It should be noted that deletion of the first call chain information in the first call request by the first agent server is not specifically limited herein. In actual application, whether to delete the first call chain information in the first call request may be determined based on an actual requirement.

It should be noted that the header file of the call request and the call chain information provided in this embodiment of this application are merely examples. In actual application, specific content and a generation rule of the first thread identifier may be independently set according to a requirement.

403: The first node generates a second call request.

After receiving the first call request, the first node processes the first call request, and generates the second call request based on the first call request. The second call request and the first call request are processed in a same thread. Therefore, a header file of the second call request further carries the first thread identifier, and the second call request is used to call the second service on a second node.

Header file content of the second call request is similar to that in Table 2, and details are not described herein again.

It should be noted that the second service may be provided on the second node, or may be provided on the first node. This is not specifically limited in this embodiment of this application. For ease of description of the solution, in this embodiment of this application, that the second service is provided on the second node is used for description.

404: The first node sends the second call request to the first agent server.

After generating the second call request, the first node sends the second call request to the first agent server. The second call request does not carry call chain information. The packet interceptor in the first agent server obtains the second call request and sends the second call request to a packet information processor.

405: The first agent server processes the second call request to obtain a third call request.

After the first agent server receives the second call request, the packet interceptor in the first agent server sends the second call request to the packet information processor. After decoding the second call request to obtain the first thread identifier, the packet information processor in the first agent server searches an information memory in the first agent server for the first thread identifier to obtain the first mapping relationship and the first call chain information. The packet information processor in the first agent server obtains the first call chain information, and generates second call chain information based on the first call chain information. In the second call chain information, a second call chain identifier is the same as the first call chain identifier, a second current service identifier is generated by the packet information processor in the first agent server according to a preset service identifier generation rule, and a second parent service identifier is the same as the first current service identifier. The packet information processor in the first agent server adds the second call chain information to the header file of the second call request to obtain the third call request. Therefore, the header file of the third call request carries the second call chain information and the first thread identifier, and the third call request is used to call the second service on the second node. The first mapping relationship is a previous mapping relationship between the first call chain information and the first thread identifier.

For ease of understanding, header file content of the third call request having been processed by the packet information processor in the first agent server is shown in Table 3, and Table 3 shows another header file of the call request packet provided in this embodiment of this application.

**Table 3: Another header file of the call request packet according to this embodiment of this application**

| Header file of the third call request | | | | |
|---|---|---|---|---|
| Second call chain information | | | First thread identifier | ... |
| Second call chain identifier: traceid1 | Second current service identifier: spanid2 | Second parent service identifier: spanid1 | pid1 | ... |
| ... | ... | ... | ... | ... |

In the header file of the third call request shown in the table, the second call chain information includes: the second call chain identifier traceid1,the second current service identifier spanid2, the second parent service identifier spanid1, and the first thread identifier pid1.

It should be noted that the header file of the call request and the call chain information provided in this embodiment of this application are merely examples. In actual application, specific content and a generation rule of the call chain identifier, the current service identifier, and the parent service identifier may be independently set according to a requirement.

406: The first agent server sends the third call request.

After the packet information processor in the first agent server adds the second call chain information to the header file of the second call request to obtain the third call request, the packet information processor in the first agent server sends the third call request to the second node.

In this embodiment of this application, after the first agent server of the first node obtains the first call request used to call the first service on the first node, when the first agent server receives the second call request sent by the first node, the first agent server processes the second call request based on the first thread identifier carried in the second call request and the first mapping relationship, to obtain the third call request. The second call request does not carry call chain information, the third call request carries the second call chain information and the first thread identifier, the second call chain information is the call chain information generated by the first agent server based on the first call chain information, and the first mapping relationship is the mapping relationship between the first call chain information and the first thread identifier. The first agent server sends the third call request to the second node. In this way, when the first service on the first node does not process the first call chain information, the call chain information may be transferred from the first node to the second node, and the first node does not need to perform call chain-related processing in a process of generating the second call request, thereby eliminating impact of a call chain on a service, and achieving zero intrusion of the service into the call chain.

2. The second node and an agent server of the second node process a call and return a call response.

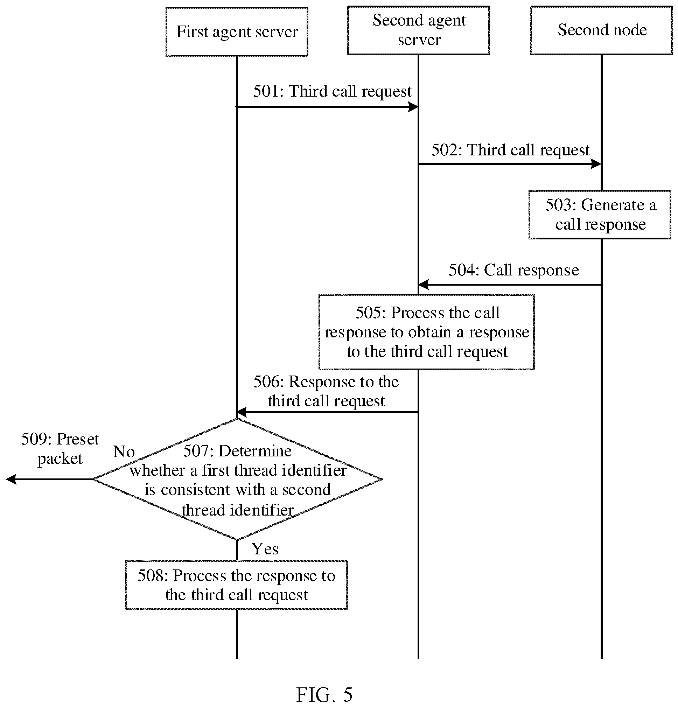

An embodiment of this application provides interaction between the second node and the second agent server of the second node when the second node receives a third call request and needs to send a response to a first service. FIG. 5 is another schematic flowchart of a call processing method according to an embodiment of this application.

501: The second agent server obtains a third call request sent by the first agent server.

The second agent server obtains the third call request sent by the first agent server. The third call request is used to call a second service on the second node, and the third call request carries a first thread identifier and second call chain information.

502: The second agent server sends the third call request to the second node.

After generating a third mapping relationship, the second agent server sends the third call request to the second node.

Optionally, before the second agent server sends the third call request to the second node, the second agent server may delete the second call chain information carried in the third call request, and send, to the second node, the third call request from which the second call chain information is deleted.

It should be noted that deletion of the second call chain information in the third call request by the second agent server is not specifically limited herein. In actual application, whether to delete the second call chain information in the third call request may be determined based on an actual requirement.

503: The second node generates a call response.

After receiving the third call request, the second node processes the third call request, and generates the call response based on the third call request. However, in a request transfer process, there are a plurality of thread models that may be specifically classified into a forwarding thread model and an event-based driven thread model.

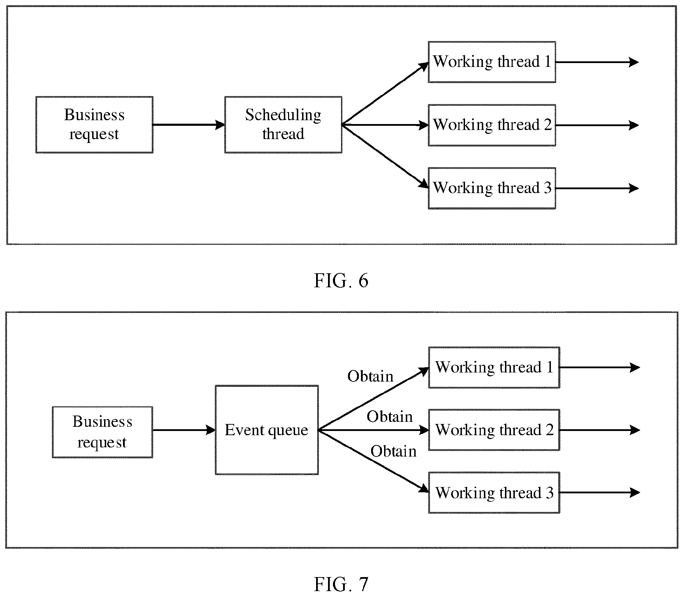

FIG. 6 is a schematic diagram of a forwarding thread model based on a state machine according to an embodiment of this application. In the forwarding thread model, when a business request arrives, a thread that is responsible for distributing requests distributes the request to different working threads. After completing a task, the working threads return processing results.

FIG. 7 is a schematic diagram of an event-based driven thread model based on a state machine according to an embodiment of this application. In the event-based driven thread model, business requests are automatically sent to an event queue. Different working threads obtain business requests from the event queue to process businesses. After completing a task, the working threads return processing results.

In this way, it is inevitable that the third call request and the call response generated after the second node processes the third call request may be processed by different threads. In this way, the call response generated by the second node carries a second thread identifier and a result of the third call request.

504: The second node sends the call response to the second agent server.

After generating the call response, the second node sends the call response to the second agent server. The call response does not carry call chain information.

505: The second agent server processes the call response to obtain a response to the third call request.

After the second agent server receives the call response, a packet interceptor in the second agent server sends the call response to a packet information processor. After decoding the call response to obtain the second thread identifier, the packet information processor in the second agent server searches the information memory in the second agent server for the second thread identifier.

If the first thread identifier is the same as the second thread identifier, the packet information processor in the second agent server obtains the third mapping relationship and the second call chain information, and the packet information processor in the second agent server obtains the second call chain information, and generates third call chain information based on the second call chain information. A third call chain identifier is the same as a second call chain identifier, a third current service identifier is generated by the packet information processor in the second agent server based on a preset service identifier generation rule, and a third parent service identifier is the same as a second current service identifier. The packet information processor in the second agent server adds the third call chain information to a header file of the call response to obtain the response to the third call request. Therefore, the response to the third call request carries the second thread identifier, the third call chain information, and a processing results of the third call request. A first mapping relationship is a previous mapping relationship between first call chain information and the first thread identifier.

If the first thread identifier is different from the second thread identifier, the packet information processor in the second agent server does not find the second thread identifier in the information memory of the second agent server, and the packet information processor in the second agent server generates third call chain information. A third current service identifier is generated by the packet information processor in the second agent server based on a preset service identifier generation rule, a third call chain identifier is the same as the third current service identifier, and the third parent service identifier is 0 or empty. The packet information processor in the second agent server adds the third call chain information to a header file of the call response to obtain the response to the third call request. Therefore, the response to the third call request carries the third call chain information and the second thread identifier.

It should be noted that in an actual case, the foregoing two cases may occur, and no specific limitation is imposed herein.

506: The second agent server sends the response to the third call request to the first agent server.

After processing the call response to obtain the response to the third call request, the second agent server sends the response to the third call request to the first agent server. In a process in which the second agent server sends the response to the third call request to the first agent server, the second thread identifier carried in the response to the third call request may change again due to a thread change. This case is not discussed herein.

507: The first agent server determines whether the first thread identifier is consistent with the second thread identifier.

After receiving the response, to the third call request, sent by the second agent server, the first agent server decodes the response to the third call request, to obtain the third call chain information and the second thread identifier. The first agent server determines whether the first thread identifier is consistent with the second thread identifier.

If the first thread identifier is consistent with the second thread identifier, step 508 is performed.

If the first thread identifier is inconsistent with the second thread identifier, step 509 is performed.

508: The first agent server processes the response to the third call request.

The first thread identifier is consistent with the second thread identifier, and the first agent server processes the response to the third call request to obtain fourth call chain information. The packet information processor in the first agent server searches the information memory in the first agent server for the first thread identifier, to obtain the first mapping relationship and the first call chain information. The packet information processor in the first agent server uses the first call chain identifier in the first call chain information as a fourth call chain identifier, uses the first current service identifier in the first call chain information as a fourth parent service identifier, and uses the third parent service identifier in the third call chain information as a third current service identifier. The information memory in the first agent server stores the fourth call chain information.

509: The first agent server sends a preset packet to the first node.

The first thread identifier is inconsistent with the second thread identifier. The first agent server sends the preset packet to the first node. The preset packet is used to give an alarm to a client, so that after receiving the preset packet, the client learns that call chain information disorder occurs in a process in which the first service calls the second service, and call chain information of this call has no reference significance.

In this embodiment of this application, after the third call request is transferred to the second node, and the second node processes the third call request, the second node feeds back a response to the processed third call request to the first agent server. When processing the packet, the service does not need to process the call chain information, and the call chain information is transferred in the agent server by using the mapping relationship between the thread identifier and the call chain information. If a process of transferring the call chain information is not performed in a same thread, the third call chain information carried in the response to the third call request has a current service identifier and a parent service identifier that are inconsistent with a current service identifier and a parent service identifier in the second call chain information. In this case, after receiving the response to the third call request, the first agent server needs to process, again based on the first call chain information, the third call chain information carried in the response to the third call request, to obtain the fourth call chain information consistent with the second call chain information. In this process, if the second thread identifier is inconsistent with the first thread identifier, a relationship between the first call chain information and the third call chain information cannot be determined, and the call chain information of the response to the third call request cannot be restored. In this embodiment of this application, consistency between the first thread identifier and the second thread identifier is determined to determine whether the call chain information of the response to the third call request can be restored. If the call chain information cannot be restored, the first node sends the preset packet to the client in a timely manner to give an alarm. This avoids a case in which call chain information is disordered and the client still performs fault diagnosis based on incorrect call chain information.

### II. A character string is transferred in a call request.

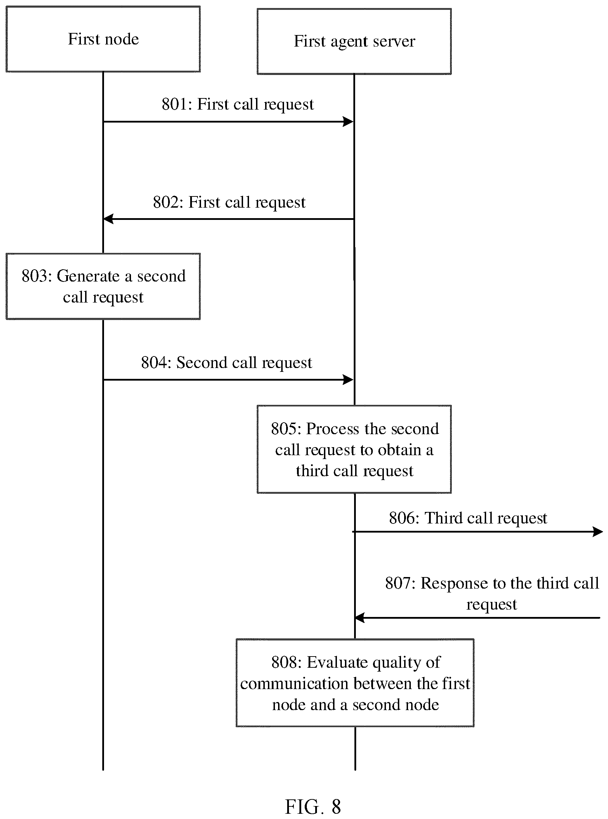

According to an embodiment of this application, the call chain information may be transferred by using the solution proposed in this application, and in addition, quality of communication between the first node and the second node may be determined by transferring a character string by using the method. The following briefly describes embodiments of this application with reference to packet interaction between the first node and the first agent server of the first node when the first node transfers a call. FIG. 8 is another schematic flowchart of a call processing method according to an embodiment of this application.

801: The first agent server obtains a first call request.

A packet interceptor in the first agent server of the first node obtains the first call request. The first call request is used to call a first service on the first node, the first call request carries first call chain information, a first thread identifier, and a first character string, and the first service has at least one sub-service. When the first service is called, the first service needs to call all sub-services of the first service. In this embodiment of this application, that the first service calls a second service is used as an example, and the second service is any sub-service of the first service.

The first call chain information includes a first call chain identifier, a first current service identifier, and a first parent service identifier. Because the first service is a service directly called by a client by using a front gateway, the first parent service identifier is empty or 0. The first thread identifier is 1.

It should be noted that the call chain information provided in this embodiment of this application is merely an example. In actual application, specific content and a generation rule of the call chain identifier, the current service identifier, and the parent service identifier may be independently set according to a requirement.

802: The first agent server sends the first call request to the first node.

The first agent server sends the first call request to the first node.

Optionally, before the first agent server sends the first call request to the first node, the first agent server may delete the first call chain information carried in the first call request, and send, to the first node, the first call request from which the first call chain information is deleted.

It should be noted that deletion of the first call chain information in the first call request by the first agent server is not specifically limited herein. In actual application, whether to delete the first call chain information in the first call request may be determined based on an actual requirement. A header file of the first call request obtained after the first call chain information is deleted is similar to that in Table 2, and details are not described herein again.

803: The first node generates a second call request.

804: The first node sends the second call request to the first agent server.

Step 803 and step 804 in this embodiment are similar to step 403 and step 404 in the embodiment corresponding to FIG. 4. Details are not described herein again.

805: The first agent server processes the second call request to obtain a third call request.

After the first agent server receives the second call request, the packet interceptor in the first agent server sends the second call request to the packet information processor. After decoding the second call request to obtain the first thread identifier, the packet information processor in the first agent server searches an information memory in the first agent server for the first thread identifier to obtain the first mapping relationship, a second mapping relationship, the first call chain information, and the first character string. The packet information processor in the first agent server obtains the first call chain information, and generates second call chain information based on the first call chain information. In the second call chain information, a second call chain identifier is the same as the first call chain identifier, a second current service identifier is generated by the packet information processor in the first agent server according to a preset service identifier generation rule, and a second parent service identifier is the same as the first current service identifier. The packet information processor in the first agent server adds the second call chain information and the first character string to a header file of the second call request, to obtain the third call request. The first mapping relationship is a mapping relationship between the first call chain information and the first thread identifier, and the second mapping relationship is a mapping relationship between the first character string and the first thread identifier. Therefore, a header file of the third call request carries the second call chain information, the first thread identifier, and the first character string, and the third call request is used to call the second service on the second node.

For ease of understanding, header file content of the third call request having been processed by the packet information processor in the first agent server is shown in Table 4, and Table 4 shows another header file of the call request packet provided in this embodiment of this application.

**Table 4: Another header file of the call request packet according to this embodiment of this application**

| Header file of the third call request | | | | |
|---|---|---|---|---|
| Second call chain information | | | First thread identifier | |
| Second call chain identifier: traceid1 | Second current service identifier: spanid2 | Second parent service identifier: spanid1 | pid1 | nuiowakdnb |
| ... | ... | ... | ... | ... |

In the header file of the third call request shown in the table, the second call chain information includes: the second call chain identifier traceid1,the second current service identifier spanid2, the second parent service identifier spanid1, and the first thread identifier pid1, and the first character string is nuiowakdnb.

It should be noted that the header file of the call request, the call chain information, the thread identifier, and the character string provided in this embodiment of this application are merely examples. In actual application, specific content and a generation rule of the call chain identifier, the current service identifier, and the parent service identifier may be independently set according to a requirement.

806: The first agent server sends the third call request.

After the packet information processor in the first agent server adds the second call chain information and the first character string to the header file of the second call request to obtain the third call request, the packet information processor in the first agent server sends the third call request to the second node.

807: The first agent server obtains a response to the third call request.

The first agent server obtains the response to the third call request. The response to the third call request carries an execution result of the third call request and a second character string, and the second character string is a character string obtained after the first character string is processed by using the second service.

808: The first agent server evaluates quality of communication between the first node and the second node.

The first agent server compares the second character string in the response to the third call request with the first character string stored in the information memory in the first agent server, and compares the first character string with the second character string by using dimensions such as a packet loss rate, a latency, packet reordering, and a packet error, so as to evaluate the quality of communication between the first node and the second node.

In this embodiment of this application, when the call chain information is transferred by using the method provided in this application, the first character string is transferred between the first call request and the second call request based on the second mapping relationship. The second mapping relationship is a mapping relationship between the first character string and the first thread identifier. After the first agent server obtains the second character string, the second character string is a character string that is transferred in the response to the third call request after the first character string is processed by using the second service, and the quality of communication between the first node and the second node is evaluated from a plurality of dimensions through comparison between the first character string and the second character string. In a transfer process of a call chain, quality of communication between nodes is collected, thereby improving monitoring efficiency and monitoring dimensions of a communication network.

The foregoing describes the solutions provided in this application from a perspective of a method, and the following briefly describes the solutions provided in this application from a perspective of a system and an apparatus.

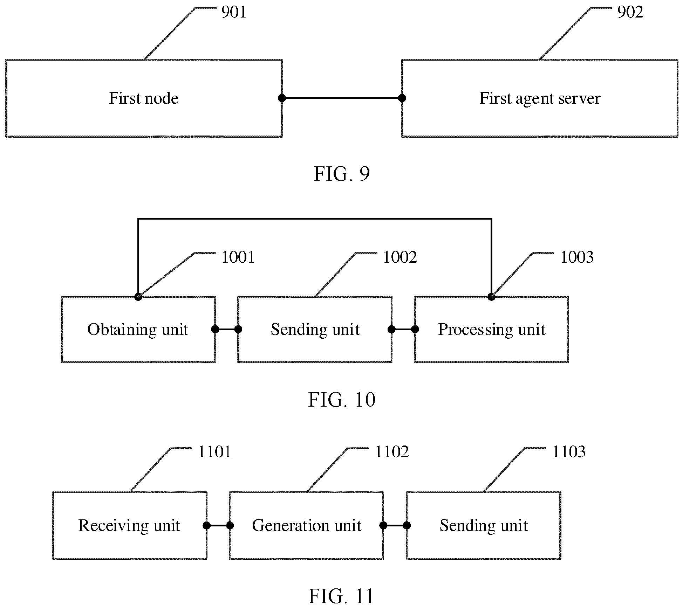

FIG. 9 is a schematic diagram of a structure of a call processing system according to an embodiment of this application. The system includes a first node 901 and a first agent server 902 of the first node.

The first agent server 902 of the first node may be communicatively connected to the first node 901, and is configured to: obtain a first call request, where the first call request is used to call a first service on the first node, the first service includes at least one sub-service, and the first call request carries first call chain information and a first thread identifier; generate a first mapping relationship between the first call chain information and the first thread identifier; send the first call request to the first node; obtain a second call request sent by the first service, where the second call request is used to call a second service on a second node, the second service is any sub-service of the first service, the second call request carries the first thread identifier, and the second call request does not carry call chain information; process the second call request based on the first thread identifier and the first mapping relationship to obtain a third call request, where the third call request carries second call chain information and the first thread identifier, and the second call chain information is call chain information generated by the first agent server based on the first call chain information; and send the third call request to the second node.

The first node may be communicatively connected to the first agent server of the first node, and is configured to: receive the first call request sent by the first agent server; generate the second call request based on the first call request; and send the second call request to the first agent server.

In this embodiment of this application, functions and procedures performed by the first node are similar to the functions and procedures performed by the first node in FIG. 4 and FIG. 8. Details are not described herein again.

In this embodiment of this application, functions and procedures performed by the first agent server are similar to the functions and procedures performed by the first agent server in FIG. 4, FIG. 5, and FIG. 8. Details are not described herein again.

FIG. 10 is a schematic diagram of a structure of a first agent server according to an embodiment of this application.

An obtaining unit 1001 is configured to obtain a first call request, where the first call request is used to call a first service on a first node, the first service includes at least one sub-service, and the first call request carries first call chain information and a first thread identifier.

A sending unit 1002 is configured to send the first call request to the first node.

The obtaining unit 1001 is further configured to obtain a second call request sent by the first service, where the second call request is used to call a second service on a second node, the second service is any sub-service of the first service, the second call request carries the first thread identifier, and the second call request does not carry call chain information.

A processing unit 1003 is configured to process the second call request based on the first thread identifier and the first mapping relationship to obtain a third call request, where the third call request carries second call chain information and the first thread identifier, and the second call chain information is call chain information generated by the first agent server based on the first call chain information.

The sending unit 1002 is configured to send the third call request to the second node.

In this embodiment of this application, functions and procedures performed by the first agent server are similar to the functions and procedures performed by the first agent server in FIG. 4, FIG. 5, and FIG. 8. Details are not described herein again.

FIG. 11 is a schematic diagram of a structure of a first node according to an embodiment of this application.

A receiving unit 1101 is configured to receive a first call request sent by a first agent server.

A generation unit 1102 is configured to generate a second call request based on the first call request.

A sending unit 1103 is configured to send the second call request to the first agent server.

In this embodiment of this application, functions and procedures performed by the first node are similar to the functions and procedures performed by the first node in FIG. 4 and FIG. 8. Details are not described herein again.

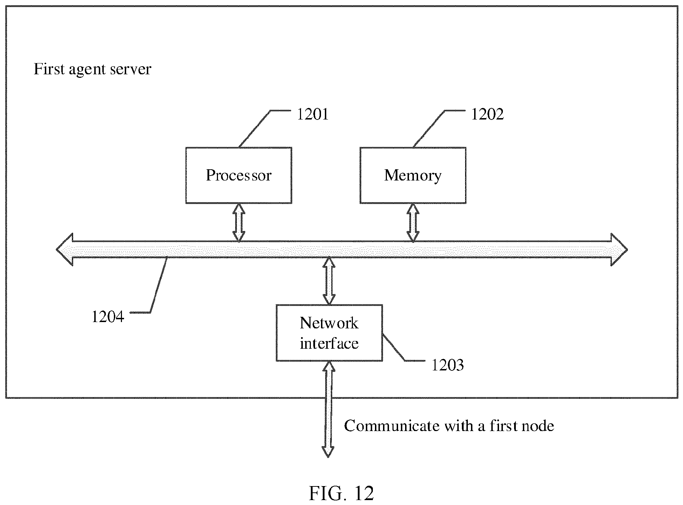

FIG. 12 is another schematic diagram of a structure of a first agent server according to an embodiment of this application. The first agent server includes: a processor 1201, a memory 1202, a network interface 1203, and a bus system 1204.

The bus system 1204 is configured to couple all hardware components of a source node together.

The network interface 1203 is configured to implement a communication connection between the source node and at least one another network element by using the Internet, a wide area network, a local network, a metropolitan area network, or the like.

The memory 1202 is configured to store program instructions and data.

The processor 1201 is configured to read the instructions and data stored in the memory 1202, to perform the functions and procedures performed by the first agent server in FIG. 4, FIG. 5, and FIG. 8. Details are not described herein again.

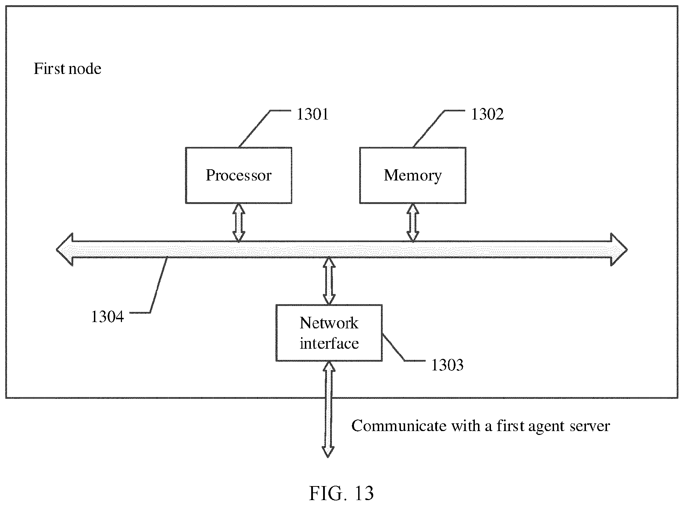

FIG. 13 is another schematic diagram of a structure of a first node according to an embodiment of this application. The first node includes: a processor 1301, a memory 1302, a network interface 1303, and a bus system 1304.

The bus system 1304 is configured to couple all hardware components of a source node together.

The network interface 1303 is configured to implement a communication connection between the source node and at least one another network element by using the Internet, a wide area network, a local network, a metropolitan area network, or the like.

The memory 1302 is configured to store program instructions and data.

The processor 1301 is configured to read the instructions and data stored in the memory 1302, to perform the functions and procedures performed by the first node in FIG. 4 and FIG. 8. Details are not described herein again.

An embodiment of this application further provides a computer program product, where the computer program product includes computer software instructions, and the computer software instructions may be loaded by a processor to implement a procedure of the call processing method in any one of FIG. 4, FIG. 5, and FIG. 8.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it can be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. All or some of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

## Claims

1. A call processing method, comprising:
obtaining, by a first agent server of a first node, a first call request, wherein the first call request is used to call a first service on the first node, the first service comprises at least one sub-service, and the first call request carries first call chain information and a first thread identifier;
sending, by the first agent server, the first call request to the first node;
obtaining, by the first agent server, a second call request sent by the first service, wherein the second call request is used to call a second service on a second node, the second service is any sub-service of the first service, and the second call request carries the first thread identifier;
processing, by the first agent server, the second call request based on the first thread identifier and a first mapping relationship to obtain a third call request, wherein the third call request carries second call chain information and the first thread identifier, the second call chain information is call chain information generated by the first agent server based on the first call chain information, and the first mapping relationship is a mapping relationship between the first thread identifier and the first call chain information; and
sending, by the first agent server, the third call request to the second node.

2. The method according to claim 1, wherein the processing, by the first agent server, the second call request based on the first thread identifier and first mapping relationship to obtain a third call request comprises:
obtaining, by the first agent server, the first call chain information based on the first thread identifier and the first mapping relationship;
generating, by the first agent server, the second call chain information based on the first call chain information; and
adding, by the first agent server, the second call chain information to the second call request to obtain the third call request.

3. The method according to claim 1 or 2, wherein before the sending, by the first agent server, the first call request to the first node, the method further comprises:
deleting, by the first agent server, the first call chain information carried in the first call request, to obtain a fourth call request.

4. The method according to any one of claims 1 to 3, wherein the method further comprises:
obtaining, by the first agent server, a response to the third call request, wherein the response to the third call request carries a second thread identifier and third call chain information;
determining, by the first agent server, whether the first thread identifier is consistent with the second thread identifier; and
if the first thread identifier is inconsistent with the second thread identifier, sending, by the first agent server, a preset packet to the first node.

5. The method according to claim 1, wherein the first call request further carries a first character string; and
the processing, by the first agent server, the second call request based on the first thread identifier and a first mapping relationship to obtain a third call request comprises:
generating, by the first agent server, the second call chain information based on the first thread identifier and the first mapping relationship;
obtaining, by the first agent server, the first character string based on the first thread identifier and a second mapping relationship, wherein the second mapping relationship is a mapping relationship between the first character string and the first thread identifier; and
adding, by the first agent server, the second call chain information and the first character string to the second call request to obtain the third call request.

6. The method according to claim 5, wherein the method further comprises:
obtaining, by the first agent server, a response to the third call request, wherein the response to the third call request carries a second character string, and the second character string is a character string obtained after the first character string is transferred by the second node; and
evaluating, by the first agent server, quality of communication between the first node and the second node based on the first character string and the second character string.

7. A call processing system, comprising a first node and a first agent server of the first node, wherein
the first agent server of the first node is configured to:
obtain a first call request, wherein the first call request is used to call a first service on the first node, the first service comprises at least one sub-service, and the first call request carries first call chain information and a first thread identifier;
send the first call request to the first node;
obtain a second call request sent by the first service, wherein the second call request is used to call a second service on a second node, the second service is any sub-service of the first service, the second call request carries the first thread identifier, and the second call request does not carry call chain information;
process the second call request based on the first thread identifier and a first mapping relationship to obtain a third call request, wherein the third call request carries second call chain information and the first thread identifier, the second call chain information is call chain information generated by the first agent server based on the first call chain information, and the first mapping relationship is a mapping relationship between the first thread identifier and the first call chain information; and
send the third call request to the second node; and
the first node is configured to:
receive the first call request sent by the first agent server;
generate the second call request based on the first call request; and
send the second call request to the first agent server.

8. The system according to claim 7, wherein the first agent server is specifically configured to:
obtain the first call chain information based on the first thread identifier and the first mapping relationship;
generate the second call chain information based on the first call chain information; and
add the second call chain information to the second call request to obtain the third call request.

9. The system according to claim 7 or 8, wherein the first agent server is further configured to delete the first call chain information carried in the first call request.

10. The system according to any one of claims 7 to 9, wherein the first agent server is further configured to:
obtain a response to the third call request, wherein the response to the third call request carries a second thread identifier and third call chain information;
determine whether the first thread identifier is consistent with the second thread identifier; and
if the first thread identifier is inconsistent with the second thread identifier, send a preset packet to the first node.

11. The system according to claim 7, wherein the first call request further carries a first character string; and
the first agent server is specifically configured to:
generate the second call chain information based on the first thread identifier and the first mapping relationship;
obtain the first character string based on the first thread identifier and a second mapping relationship, wherein the second mapping relationship is a mapping relationship between the first character string and the first thread identifier; and
add the second call chain information and the first character string to the second call request to obtain the third call request.

12. The system according to claim 11, wherein the first agent server is further configured to:
obtain a response to the third call request, wherein the response to the third call request carries a second character string, and the second character string is a character string obtained after the first character string is processed by using the second service; and
evaluate quality of communication between the first service and the second service based on the first character string and the second character string.

13. A server, comprising:
an obtaining unit, configured to obtain a first call request, wherein the first call request is used to call a first service on first node, the first service comprises at least one sub-service, and the first call request carries first call chain information and a first thread identifier;
a sending unit, configured to send the first call request to the first node, wherein
the obtaining unit is further configured to obtain a second call request sent by the first service, wherein the second call request is used to call a second service on a second node, the second service is any sub-service of the first service, the second call request carries the first thread identifier, and the second call request does not carry call chain information; and
a processing unit, configured to process the second call request based on the first thread identifier and a first mapping relationship to obtain a third call request, wherein the third call request carries second call chain information and the first thread identifier, the second call chain information is call chain information generated by a first agent server based on the first call chain information, and the first mapping relationship is a mapping relationship between the first thread identifier and the first call chain information, wherein
the sending unit is further configured to send the third call request to the second node.

14. The server according to claim 13, wherein the processing unit is specifically configured to:
obtain the first call chain information based on the first thread identifier and the first mapping relationship;
generate the second call chain information based on the first call chain information; and
add the second call chain information to the second call request to obtain the third call request.

15. The server according to claim 13 or 14, wherein the server further comprises:
a deletion unit, configured to delete the first call chain information carried in the first call request.

16. The server according to any one of claims 13 to 15, wherein the obtaining unit is further configured to obtain a response to the third call request, wherein the response to the third call request carries a second thread identifier and third call chain information;
the server further comprises a determining unit, configured to determine whether the first thread identifier is consistent with the second thread identifier; and
the sending unit is further configured to: if the first thread identifier is inconsistent with the second thread identifier, send a preset packet to the first node.

17. The server according to claim 13, wherein the first call request further carries a first character string; and
the processing unit is further configured to:
generate the second call chain information based on the first thread identifier and the first mapping relationship;
obtain the first character string based on the first thread identifier and a second mapping relationship, wherein the second mapping relationship is a mapping relationship between the first character string and the first thread identifier; and
add the second call chain information and the first character string to the second call request to obtain the third call request.

18. The server according to claim 17, wherein the obtaining unit is further configured to obtain a response to the third call request, wherein the response to the third call request carries a second character string, and the second character string is a character string obtained after the first character string is transferred by the second node; and
the determining unit is further configured to evaluate quality of communication between the first node and the second node based on the first character string and the second character string.

19. A server, comprising one or more processors, wherein the one or more processors are coupled to a memory, the memory stores a program, and when the program stored in the memory is executed by the one or more processors, the method according to any one of claims 1 to 6 is implemented.

20. A computer-readable storage medium, comprising instructions, wherein when the instructions run on a computer, the computer performs the method according to any one of claims 1 to 6.
